# EUROPEAN PATENT APPLICATION

(11) **EP 1 071 296 A1**
(43) Date of publication of application: **24.01.2001**
(21) Application number: 99401864.6
(22) Date of filing: 22.07.1999
(51) Int. Cl.: H04Q 7/22

(54) **Method to multi-cast data packets to mobile stations, and related gateway, service and routing nodes**

(71) Applicant: ALCATEL, 75008 Paris (FR)
(72) Inventor: Leroy, Suresh André Jean-Marie, 2970 Schilde (BE); Ramalho, Maria Fernanda, 1170 Brussels (BE); Sales, Bernard, 1190 Brussels (BE); Aerts, Helena Tine, 2000 Antwerp (BE)
(74) Representative: Plas, Axel

(57) **Abstract**

To transfer public data packets (PU-DP) from an originating terminal (TE) to a plurality of mobile stations (MS1, MS2, MS3, MS4, MS6) over a public data packet network (INTERNET) and a mobile data packet network (GPRS-SYSTEM), the public data packets (PU-DP) are multi-casted through the public data packet network (INTERNET) by means of a multi-cast address (PU-MCA) in an overhead section (PU-H) of the public data packets (PU-DP). In addition, the public data packets (PU-DP) are multi-casted through at least part of the mobile data packet network (GPRS-SYSTEM) by means of a private multi-cast address (PR-MCA) in an overhead section (PR-H) of private data packets (PR-DP) that tunnel the public data packets (PU-DP) through the mobile data packet network (GPRS-SYSTEM).

## Description

The present invention relates to a method to transfer data packets over a public data packet network and a mobile data packet network to a plurality of mobile stations as defined in the non-characteristic part of claim 1, a gateway node for interfacing between the public data packet network and the mobile data packet network as defined in the non-characteristic part of claim 2, a service node for serving mobile stations in the mobile data packet network as defined in the non-characteristic part of claim 6, and a routing node for routing data packets in between gateway nodes and service nodes of the mobile data packet network as defined in the non-characteristic part of claim 9.

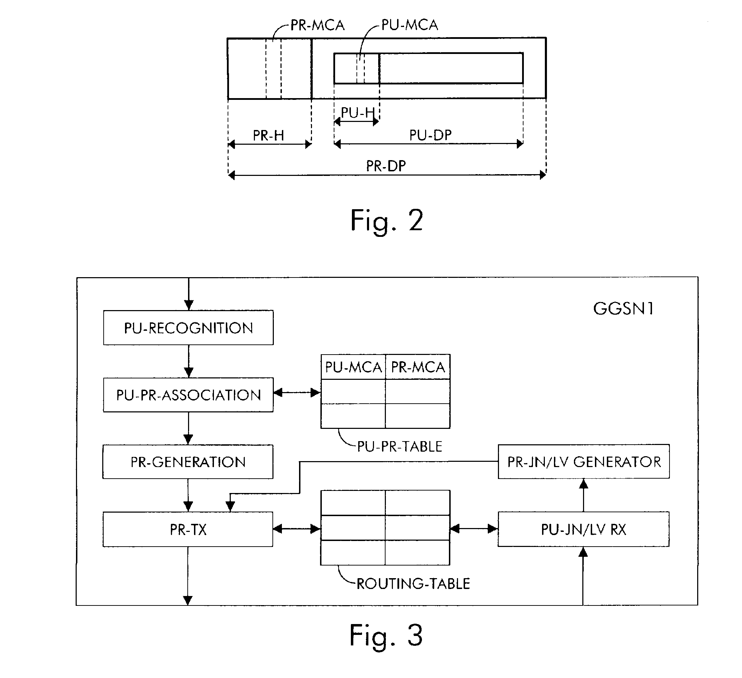

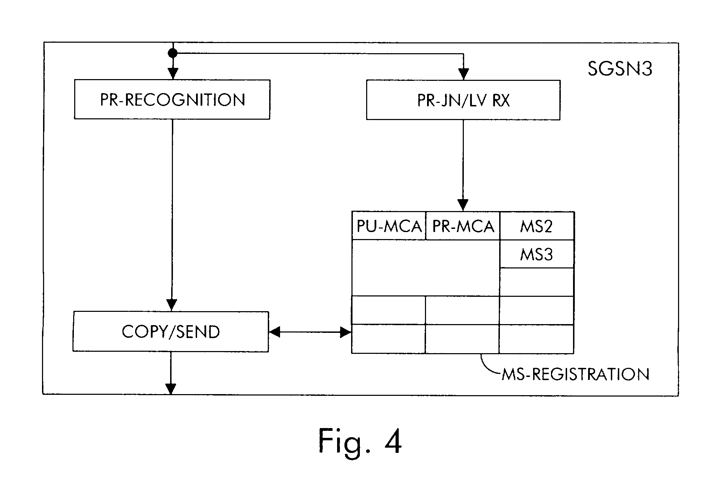

Such a method for transferring data packets through a mobile data packet network, as well as a gateway node, service node and routing node of the mobile data packet network are already known in the art, e.g. from *the standard specification "Digital Cellular Telecommunications System (Phase 2+); General Packet Radio Service (GPRS); Service Description; Stage 2", published by ETSI (European Telecommunications Standards Institute) under the reference TS/SMG-030360Q. This standard specification is also named "GSM 03.60 Version 6.0.0" but will be referred to by "GPRS Specification" in the remainder of this patent application.* The GPRS Specification describes a data packet service for a mobile communication network that makes use of the GSM (Global System for Mobile Communications) air interface for the communication between base stations and mobile stations. For the communication up to the base stations, the GPRS Specification introduces two new network nodes: a Gateway GPRS Support Node (GGSN) provides inter-working between an external or public packet switching network and the mobile or private packet switching network, whereas a Serving GPRS Support Node (SGSN) keeps track of the individual mobile stations within a certain service area, and performs security functions, access control and mobility functions, e.g. change of SGSN by a mobile station. The architecture of a GPRS (General Packet Radio Service) system built up of Gateway GPRS Support Nodes, Serving GPRS Support Nodes, Base Stations and Mobile Stations is illustrated by Figure 2 and Figure 3 respectively on page 18 and 19 of the above cited GPRS Specification. Figure 4 on page 21 gives an overview of the protocol stack used for transferring data packets through the GPRS system. To route data packets received from an external data packet network like the internet to a mobile station in the known GPRS system, a so called point-to-point tunnel is set up from the Gateway GPRS Support Node (GGSN) that receives the data packets from the external data packet network to the Serving GPRS Support Node (SGSN) in whose service area the mobile station is residing. This means that the external data packets are encapsulated in internal data packets in the Gateway GPRS Support Node, that these internal data packets are routed to the Serving GPRS Support Node accordance with an internal routing protocol, and that the external data packets are de-capsulated from the internal data packets in the Serving GPRS Support Node to be forwarded to the Base Station that will send the data packets to the mobile station over the air interface.

If in the known GPRS system the same data packets have to be transferred to more than one mobile station residing in the same service area, for instance because these mobile stations are members of the same multicast group in the external network, these data packets will independently be forwarded from the Gateway GPRS Support Node (GGSN) to the different mobile stations via separate point-to-point tunnels. In such situations, network resources are inefficiently used in the known mobile data packet network because duplicated data packets are transferred over the common part of the routes to the different mobile terminals.

An object of the present invention is to provide a method for transferring data packets through a mobile data packet network, as well as a gateway node, a service node and a routing node similar to the above known ones, but which use network resources, i.e. bandwidth capacity, more efficiently in case the same data packets have to be routed to a plurality of mobile terminals.

According to the invention, this object is achieved by the method to transfer data packets over a public data packet network and a mobile data packet network to a plurality of mobile stations as defined in claim 1, the gateway node for interfacing between the public data packet network and the mobile data packet network as defined in claim 2, the service node for serving mobile stations in the mobile data packet network as defined in claim 6, and the routing node for routing data packets in between gateway nodes and service nodes of the mobile data packet network as defined in claim 9.

Indeed, by multi-casting the internal data packets (named private data packets in the remainder of this patent application because they are routed within the mobile data packet network that is usually owned by a private operator) that tunnel external data packets (named public data packets in the remainder of this patent application because they are routed through a public data packet network such as the internet) that belong to an external multi-cast connection, it is avoided that the same public data packets are duplicated and encapsulated in different private data packets that are transferred over at least partially common routes in the mobile data packet network. Multi-casting internal data packets is realised via internal multi-cast addresses associated with external multi-cast groups where a mobile station can subscribe to. When a gateway node receives public data packets for a multi-cast connection, it will send these data packets on the private multi-cast tree which contains service nodes that contain members of the external multi-cast group in their service area. The service nodes further send the data packets to the mobile stations that are member of the multi-cast group via point-to-point connections. In this way, the network resources for transfer of data between the gateway nodes and the service nodes are used more efficiently and the capacity of the mobile data packet network is enlarged significantly in particular if the share of multi-cast traffic in the aggregate data traffic is significant.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

An additional feature of the gateway node according to the present invention is defined by claim 3.

This, a mobile station can become member of a public multi-cast group by transmitting a public join message towards a gateway node. The gateway node can interpret this public join message and inform the service node in whose service area the mobile station is residing, that the mobile station becomes member of the public multi-cast group via a private join message. The private join message is addressed to the service node and contains the public join message received by the gateway node. It is necessary to first transfer the public join message to the gateway node and to feed back the public join message encapsulated in a private message to the service node because the service node cannot interpret the public join message transmitted by the mobile station towards the gateway node.

An alternative way of joining the public multi-cast group requires that the mobile station sends a GPRS specific join message that can be interpreted by both the service node and the gateway node. This alternative does not require feedback of join messages from the gateway node to the service node but involves modification of the GPRS standard specification because the format of such a GPRS specific join message has to be standardised.

Another feature of the gateway node according to the present invention is defined in claim 4.

In this way, by assigning to the private multi-cast group that is associated with a public multi-cast group a private multi-cast address that is equal to the public multi-cast address, complexity of the address association means in the gateway node is minimised. No table linking the private multi-cast addresses with the public multi-cast addresses has to be maintained in gateway nodes and service nodes.

Compared to claim 4, an alternative implementation of the gateway node according to the present invention is defined by claim 5.

In this way, the address association means in the gateway node needs to keep track of a table wherein public multi-cast addresses and associated private multi-cast addresses are memorised which makes the address association means more complex but creates a greater flexibility in assignment and use of private multi-cast addresses.

An additional feature of the service node according to the present invention is defined in claim 7.

Thus, the service node is able to maintain a list of mobile stations which are member of a public multi-cast group. The service node updates the table wherein public multi-cast addresses, private multi-cast addresses and mobile stations are linked upon receipt of join/leave messages sent to it by a gateway node.

As an alternative to claim 7, claim 8 specific that the table wherein public multi-cast addresses, private multi-cast addresses and mobile stations are linked may be updated upon receipt of GPRS specific join/leave messages from mobile stations that want to join/leave a public multi-cast group. Such a GPRS specific join/leave message can be interpreted by the service node if its format is standardised.

The above mentioned and other objects and features of the invention will become more apparent and the invention itself will be best understood by referring to the following description of an embodiment taken in conjunction with the accompanying drawings wherein:
Fig. 1 represents an architectural scheme of a system including gateway nodes GGSN1 and GGSN2 according to the present invention, service nodes SGSN1, SGSN2, SGSN3, SGSN4 and SGSN5 according to the present invention, and routing nodes DPR1, DPR2, DPR3, DPR4, DPR5 and DPR6 according to the present invention;
Fig. 2 illustrates the structure of a private data packet PR-DP multi-casted according to the present invention;
Fig. 3 represents a functional block scheme of an embodiment of the gateway node GGSN1 according to the present invention; and
Fig. 4 represents a functional block scheme of an embodiment of the service node SGSN3 according to the present invention.

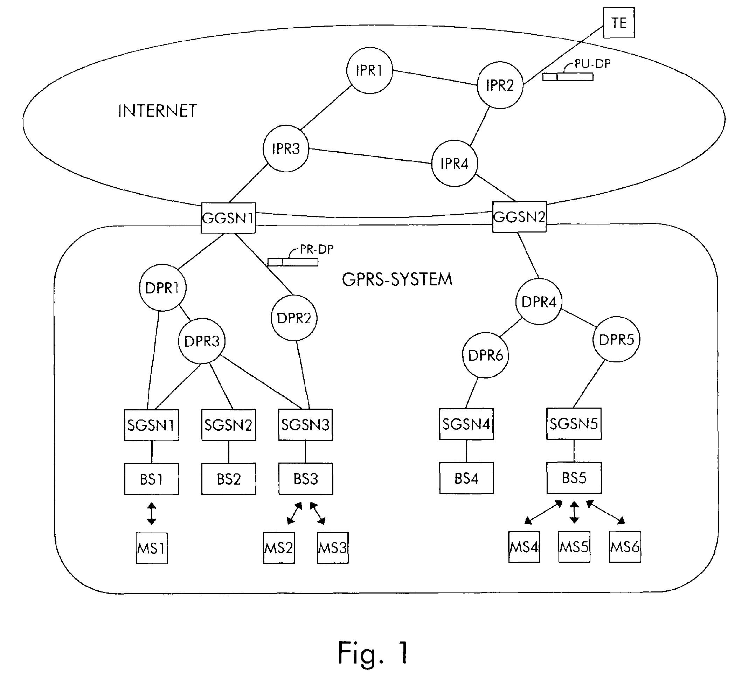

Fig. 1 shows the internet INTERNET and a General Packet Radio Service system GPRS-SYSTEM. The internet INTERNET contains a plurality of IP (Internet Protocol) routers IPR1, IPR2, IPR3 and IPR4 interconnected via links and one terminal TE of the internet INTERNET is also drawn. The General Packet Radio Service system GPRS-SYSTEM contains two Gateway GPRS Supporting nodes GGSN1 and GGSN2, a number of data packet routers DPR1, DPR2, DPR3, DPR4, DPR5 and DPR6, five Service GPRS Supporting nodes SGSN1, SGSN2, SGSN3, SGSN4 and SGSN5, and five base stations BS1, BS2, BS3, BS4 and BS5. Also six mobile stations or terminals of the GPRS-SYSTEM are drawn in Fig. 1: MS1, MS2, MS3, MS4, MS5 and MS6.

In the internet INTERNET, the first IP router IPR1 is connected to both the second IP router IPR2 and to the third IP router IPR3. The second IP router IPR2 is connected to the fourth IP router IPR4, the third IP router IPR3 is connected respectively to the first gateway node GGSN1 and to the fourth IP router IPR4, and the just mentioned fourth IP router IPR4 is connected to the second gateway node GGSN2. The terminal TE is interconnected with the second IP router IPR2. In the GPRS-SYSTEM, the first gateway node GGSN 1 is connected to both the first data packet router DPR1 and the second data packet router DPR2. The first data packet router DPR1 additionally is interconnected with the third data packet router DPR3 and the first service node SGSN1, whereas the second data packet router DPR2 is only interconnected with the third service node SGSN3. The third data packet router DPR3 is connected to the first service node SGSN1, the second service node SGSN2 and the third service node SGSN3. These first, second and third service nodes SGSN1, SGSN2 and SGSN3 are respectively connected to the first, second and third base stations BS1, BS2 and BS3. The second gateway node GGSN2 is connected to the fourth data packet router DPR4. This fourth data packet router DPR4 further is connected to the fifth data packet router DPR5 and to the sixth data packet router DPR6. The fifth data packet router DPR5 and the fifth service node SGSN5 are interconnected, and also the sixth data packet router DPR6 and the fourth service node SGSN4 are interconnected. The just mentioned fourth service node SGSN4 is connected to the fourth base station BS4 and the earlier mentioned fifth service node SGSN5 is connected to the fifth base station BS5. The first mobile station MS1 is located within the service area of the first service node SGSN1, the second mobile station MS2 as well as the third mobile station MS3 are located within the service area of the third service node SGSN3. Mobile stations MS4, MS5 and MS6 are all located in the service area of the fifth service node SGSN5.

In the internet INTERNET data are communicated in accordance with the internet protocol (IP). Data in other words are encapsulated in IP packets PU-DP. Such an IP packet PU-DP is shown in Fig. 2 and contains an overhead section or IP header PU-H and a payload section wherein user data can be embedded. One field of the IP header PU-H carries the address of the destination of the IP data packet PU-DP. In case the IP data packet PU-DP is destined to all members of a multi-cast group, the sender of the IP data packet PU-DP will embed an internet multi-cast address PU-MCA in the destination address field of that IP data packet PU-DP. The internet terminal TE in Fig. 1 for example is supposed to have sent an IP data packet PU-DP to such a multi-cast group. The IP routers IPR1, IPR2, IPR3 and IPR4 have the task to route IP data packets from their origin to their destination(s). The IP routers IPR1, IPR2, IPR3 and IPR4 thereto look at the contents of the destination address field of the IP data packets they receive and can route the IP data packets either by consulting routing tables or via explicit routing techniques. In case an IP router, IPR1, IPR2, IPR3 or IPR4 receives an IP data packet PU-DP whose destination address field contains an internet multi-cast address PU-MCA, the IP router will multi-cast the data packet PU-DP: the data packet PU-DP is then forwarded to the IP routers that joined the multi-cast tree whereover such IP data packets PU-DP are routed towards all members of the multi-cast group.

In the GPRS-SYSTEM data packets are routed towards mobile stations in accordance with the GPRS standard specification, whereto reference is made in the introductory part of this patent application. The gateway nodes GGSN1 and GGSN2 provide interworking with the internet INTERNET, and encapsulate an IP data packet PU-DP received from the internet INTERNET in a private data packet PR-DP that can be routed through the GPRS-SYSTEM towards the destination mobile stations. This operation is known as tunneling. Such a private data packet PR-DP wherein the IP data packet PU-DP is encapsulated, is shown in Fig. 2. This private data packet PR-DP also contains an overhead section PR-H and a payload section wherein the IP data packet PU-DP is embedded. In accordance with the GPRS standard specification, the private data packet PR-DP is a private IP (Internet Protocol) packet and consequently the overhead section PR-H thereof is an IP (Internet Protocol) header wherein also one field is reserved for the destination address of the private data packet PR-DP. As will be explained further, the gateway node GGSN1 that encapsulates the IP data packet PU-DP in the private data packet PR-DP fills the destination address field of the private data packet header PR-H with a private multi-cast address PR-MCA when the destination address field of the IP data packet PU-DP contains an internet multi-cast address PU-MCA.

The data packet routers DPR1, DPR2, DPR3, DPR4, DPR5 and DPR6 include the functionality to route a private data packet PR-DP to its destination or destinations and, similarly to the IP routers IPR1, IPR2, IPR3 and IPR4 in the internet INTERNET, thereto look at the contents of the destination address field of the private data packets PR-DP and consult routing tables or perform explicit routing techniques. The service nodes SGSN1, SGSN2, SGSN3, SGSN4 and SGSN5 keep track of the locations of the mobile stations and perform mobility security functions and access control compliant with the GPRS standard specification. Via the base stations BS1, BS2, BS3, BS4 and BS5, the service nodes SGSN1, SGSN2, SGSN3, SGSN4 and SGSN5 are able to set up radio connections to the mobile stations MS1, MS2, MS3, MS4, MS5 and MS6 so that the data packets can be delivered to the mobile stations MS1, MS2, MS3, MS4, MS5 and MS6.

In the following paragraphs, it will be supposed that the internet terminal TE is the origin of internet data packets PU-DP destined to the members of a multi-cast group with internet multi-cast address PU-MCA. The mobile stations MS1, MS2, MS3, MS4 and MS6 want to receive such data packets and thereto request to become member of this internet multi-cast group. The registration of these mobile stations MS1, MS2, MS3, MS4 and MS6 as members of the multi-cast group, as well as the way wherein the internet data packets PU-DP destined to the members of this multi-cast group are routed towards the mobile stations MS1, MS2, MS3, MS4 and MS6 in accordance with the principles of the present invention will be explained in the next paragraphs. Reference will be made to Fig. 3 and Fig. 4 in these paragraphs to address the required functionality respectively in the gateway nodes GGSN1 and GGSN2 and the service nodes SGSN1, SGSN2, SGSN3, SGSN4 and SGSN5 to be able to fulfil the principles of the present invention.

Gateway node GGSN1 of Fig. 1 is drawn in more detail in Fig. 3 and includes an internet multi-cast address recognition device PU-RECOGNITION, a multi-cast address association device PU-PR-ASSOCIATION, a private data packet generator PR-GENERATION, a private data packet transmitter PR-TX, a multi-cast address table PU-PR-TABLE, a routing table ROUTING-TABLE, a public join/leave message receiver PU-JN/LV RX, and a private join/leave message generator PR-JN/LV GENERATOR.

The internet multi-cast address recognition device PU-RECOGNITION, the multi-cast address association device PU-PR-ASSOCIATION, the private data packet generator PR-GENERATION, and the private data packet transmitter PR-TX are cascade coupled between a port of the gateway node GGSN1 whereto the third IP router IPR3 is connected in Fig. 1 and a port of the gateway node GGSN1 whereto the data packet routers DPR1 and DPR2 of the GPRS-SYSTEM in Fig. 1 are coupled. The multi-cast address table PU-PR-TABLE interfaces with the multi-cast address association device PU-PR-ASSOCIATON, and the routing table ROUTING-TABLE interfaces with the private data packet transmitter PR-TX. The public join/leave message receiver PU-JN/LV RX is connected to the port of gateway node GGSN1 whereto data packet routers DPR1 and DPR2 are coupled. The public join/leave message receiver PU-JN/LV RX further is coupled to the private data packet transmitter PR-TX via the private join/leave message generator PR-JN/LV GENERATOR, and also interfaces with the routing table ROUTING-TABLE.

The service node SGSN3 of Fig. 1 is drawn in more detail in Fig. 4 and includes a private multi-cast address recognition device PR-RECOGNITION, a private data packet copier and transmitter COPY/SEND, a multi-cast group registration device MS-REGISTRATION, and a private join/leave message receiver PR-JN/LV RX.

The private multi-cast address recognition device PR-RECOGNITION and the private data packet copier and transmitter COPY/SEND are cascade coupled between a port of the service node SGSN3 that is coupled to the data packet routers DPR2 and DPR3 in Fig. 1, and a port of the service node SGSN3 whereto the base station BS3 is coupled. To the port coupled to data packet routers DPR2 and DPR3 also the private join/leave message receiver PR-JN/LV RX is connected and this private join/leave message receiver PR-JN/LV RX has an output terminal coupled to an input terminal the multi-cast group registration device MS-REGISTRATION. The multi-cast group registration device MS-REGISTRATION interfaces with the private data packet copier and transmitter COPY/SEND.

If the second mobile station MS2 wants to become member of the multi-cast group with internet multi-cast address PU-MCA, it will send a public join message to the service node SGSN3 in whose service area the mobile station MS2 is residing. The service node SGSN3 cannot interpret this public join message and transparently transfers the join message via the data packet routers to gateway node GGSN1. In the gateway node GGSN1, the public join/leave message receiver PU-JN/LV RX receives the public join message and interprets this message. The private multi-cast tree in GPRS-SYSTEM is updated so that the internet data packets PU-DP addressed to the internet multi-cast address PU-MCA will be routed to the mobile station MS2. In addition, the public join message is encapsulated in a private join message by the private join/leave message generator PR-JN/LV GENERATOR and this private join message is sent to the service node SGSN3 in whose service area mobile station MS2 is residing. In this way, the service node SGSN3 is made aware that the mobile station MS2 becomes member of the multi-cast group with the internet multi-cast address PU-MCA and private multi-cast address PR-MCA. Indeed, this multi-cast group is addressed within the GPRS-SYSTEM with a private multi-cast address PR-MCA that is linked to the public multi-cast address PU-MCA via a table PU-PR-TABLE in the gateway node GGSN1 and via the multi-cast group registration device MS-REGISTRATION in the service node SGSN3. The just mentioned multi-cast group registration device MS-REGISTRATION upon instruction of the private join/leave message receiver PR-JN/LV RX memorises that mobile station MS2 becomes member of the multi-cast group with public multi-cast address PU-MCA and private multi-cast address PR-MCA. It is the task of the gateway node GGSN1 to mention to the IP router IPR3 that it wants to join the internet multi-cast group with internet multi-cast address PU-MCA. Similarly to mobile station MS2, mobile station MS3 will join the public multi-cast group with internet multi-cast address PU-MCA. A public join message is transmitted towards gateway node GGSN1 and returned as a private join message to the service node SGSN3 in whose area the mobile station MS3 is located. In the multi-cast group registration device MS-REGISTRATION it is memorised that mobile station MS3 also wants to receive the private data packets destined to the multi-cast group with public multi-cast address PU-MCA and private multi-cast address PR-MCA. Also mobile stations MS1, MS4 and MS6 become members of the multi-cast group which is addressed by the internet multi-cast address PU-MCA in the INTERNET and which is addressed by the private multi-cast address PR-MCA in the GPRS-SYSTEM. Mobile station MS1 for example is registered as member of this multi-cast group in the service node SGSN1, In a similar way, service node SGSN5 registers that the mobile stations MS4 and MS6 have joined this multi-cast group.

Summarising, a registration mechanism is provided in the GPRS-SYSTEM whereby the service nodes SGSN 1, SGSN2, SGSN3, SGSN4 and SGSN5 register which mobile terminals MS1, MS2, MS3, MS4 and MS6 joined a public multi-cast group via a join message that is sent to a gateway node and returned thereby as a private join message. In case a mobile station moves to another service area, the registered information must be updated. This update may form part of the inter SGSN routing area update procedure in a cellular mobile system. In case a mobile station wants to be deleted as member of a public multi-cast group, it will send a leave message which is treated in a similar way as the join messages. The service node thereupon de-registers the mobile station as member of the multi-cast group.

If an internet server or a terminal TE transmits internet data packets PU-DP addressed to members of the internet multi-cast group with internet multi-cast address PU-MCA, these packets will be routed to the gateway nodes GGSN1 and GGSN2 because these gateway nodes joined the multi-cast tree associated with that internet multi-cast group as explained above. The internet multi-cast address recognition device PU-RECOGNITION in gateway node GGSN1 detects that the received internet data packet PU-DP is addressed to the internet multi-cast group by recognising internet multi-cast address PU-MCA in the destination address field of the internet data packet PU-DP. The internet multi-cast recognition device PU-RECOGNITION instructs the multi-cast address association device PU-PR-ASSOCIATION to retrieve from the multi-cast address table PU-PR-TABLE the private multi-cast address PR-MCA that is associated with the internet multi-cast address PU-MCA. This private multi-cast address PR-MCA in an alternative embodiment of the invention without multi-cast address table PU-PR-TABLE may be equal to the public multi-cast address PU-MCA. The internet data packet PU-DP is encapsulated in a private data packet PR-DP by the private data packet generator PR-GENERATION and is forwarded by the private data packet transmitter PR-TX over the private multi-cast tree addressed via private multi-cast address PR-MCA. The private data packet transmitter PR-TX thereto consults the routing table ROUTING-TABLE. The internet data packet PU-DP, encapsulated in the private data packet PR-DP, consequently is multi-casted once to the service node SGSN3 and not transferred two times to service node SGSN3 because two mobile stations MS2 and MS3 in its service area want to receive this data packet PU-DP. In the service node SGSN3, the private multi-cast address recognition device PR-RECOGNITION recognises the private multi-cast address PR-MCA in the header PR-H of the private data packet PR-DP and thereupon instructs the data packet copier and transmitter COPY/SEND to send copies of the data packet PU-DP to all mobile stations, MS2 and MS3, that are member of the public multi-cast group addressed via the public multi-cast address PU-MCA. The private data packet copier and transmitter COPY/SEND thereto consults the memory of the multi-cast group registration device MS-REGISTRATION. In a similar way as described for mobile stations MS2 and MS3, the public data packet PU-DP will be routed to the mobile station MS1 and will be routed to the mobile stations MS4 and MS6. To transfer the data packet PU-DP to mobile stations MS4 and MS6, the data packet again will be multi-casted only once to service node SGSN5, which will duplicate the data packet PU-DP and send a copy to each one of the mobile stations MS4 and MS6.

Summarising, the private data packets PR-DP wherein public data packets PU-DP destined to an internet multi-cast group are encapsulated, are multi-casted in the GPRS-SYSTEM up to the level of the service nodes. This is made possible by associating private multi-cast groups with the internet multi-cast groups and by maintaining in the service nodes which mobile stations are member of the different public multi-cast groups. In this way, the required bandwidth for transfer of multi-cast traffic between the gateway nodes and the service nodes of the GPRS-SYSTEM is reduced significantly.

Although implementation of the invention has been described above for transfer of internet data packets over the internet and over a GPRS system interfacing with the internet, it is clear that the same principles can be applied to transfer for example IP or X.25 data packets over respectively an IP or X.25 network and a UMTS (Universal Mobile Telecommunications System) system, interfacing with the IP or X.25 network. In fact the invention can be applied in any system wherein private mobile data packets tunnel public data packets received from a public or external data packet network towards mobile stations, irrespective of the particular protocol that is used in the public data packet network and the mobile network.

It is also remarked that introduction of the present invention in a GPRS system is not complex because a GPRS system already uses the Internet Protocol to tunnel public data packets from the gateway nodes to the service nodes. Introduction of private multi-cast IP addresses, similar to the public multi-cast group IP addresses that are used in the internet makes the invention feasible. No adaptation of the protocol is required in the GPRS system to enable introduction of the present invention.

Furthermore it is noticed that the private multi-cast address and public multi-cast address associated with each other can be equal. The association of a private multi-cast address with a public multi-cast address then becomes very simple because no tables are required in the gateway nodes and service nodes. The flexibility in use of private addresses is increased if the private multi-cast address associated with a public multi-cast address is not equal thereto. The link between private and public multi-cast addresses then however has to be memorised in a centralised or distributed database.

While the principles of the invention have been described above in connection with specific apparatus, it is to be clearly understood that this description is made only by way of example and not as a limitation on the scope of the invention.

## Claims

1. Method to transfer public data packets (PU-DP) from an originating terminal (TE) to at least a plurality of mobile stations (MS1, MS2, MS3, MS4, MS6) over a public data packet network (INTERNET) and a mobile data packet network (GPRS-SYSTEM) whereby said public data packets (PU-DP) are multi-casted through said public data packet network (INTERNET) by means of a multi-cast address (PU-MCA) in an overhead section (PU-H) of said public data packets (PU-DP),
CHARACTERISED IN THAT said public data packets (PU-DP) are further multi-casted through at least part of said mobile data packet network (GPRS-SYSTEM) by means of a private multi-cast address (PR-MCA) in an overhead section (PR-H) of private data packets (PR-DP) that tunnel said public data packets (PU-DP) through at least said part of said mobile data packet network (GPRS-SYSTEM).

2. Gateway node (GGSN1) for interfacing between a public data packet network (INTERNET) and a mobile data packet network (GPRS-SYSTEM), said gateway node (GGSN1) comprising:
a. public multi-cast address recognition means (PU-RECOGNITION) to recognise a public multi-cast address (PU-MCA) in an overhead section (PU-H) of public data packets (PU-DP) sent from an originating terminal (TE) to at least a plurality of mobile stations (MS1, MS2, MS3, MS4, MS6) over said public data packet network (INTERNET) and said mobile data packet network (GPRS-SYSTEM),
CHARACTERISED IN THAT said gateway node (GGSN 1 ) further comprises:
b. address association means (PU-PR-ASSOCIATION) to associate a private multi-cast address (PR-MCA) with said public multi-cast address (PU-MCA); and
c. private data packet generation means (PR-GENERATION) to generate private data packets (PR-DP) for tunnelling said public data packets (PU-DP) through at least part of said mobile data packet network (GPRS-SYSTEM) towards said mobile stations (MS1, MS2, MS3, MS4, MS6), said private data packets (PR-DP) having said private multi-cast address (PR-MCA) in an overhead section thereof.

3. Gateway node (GGSN 1 ) according to claim 2,
CHARACTERISED IN THAT said gateway node (GGSN 1 ) further comprises:
d. public join/leave message receiving means (PU-JN/LV RX), adapted to receive a join/leave message from a mobile station (MS2) indicating that said mobile station (MS2) wants to join/leave a public multi-cast group; and
e. private join/leave message generating means (PR-JN/LV GENERATION), coupled to said public join/leave message receiving means (PU-JN/LV RX) and adapted to generate a private data packet for tunnelling said join/leave message from said gateway node (GGSN1) to a service node (SGSN3) of said mobile data packet network (GPRS-SYSTEM) serving said mobile station (MS2).

4. Gateway node (GGSN1) according to claim 2 or claim 3,
CHARACTERISED IN THAT said address association means (PU-PR-ASSOCIATION) is adapted to associate with said public multi-cast address (PU-MCA) a private multi-cast address (PR-MCA) that is equal to said public multi-cast address (PU-MCA).

5. Gateway node (GGSN1) according to claim 2 or claim 3,
CHARACTERISED IN THAT said address association means (PU-PR-ASSOCIATION) is adapted to associate with said public multi-cast address (PU-MCA) a private multi-cast address (PR-MCA) linked to said public multi-cast address (PU-MCA) via a table (PU-PR-TABLE) comprised in said gateway node (GGSN 1 ).

6. Service node (SGSN3) for serving in a mobile data pocket network (GPRS-SYSTEM) data packet communication to mobile stations (MS2, MS3) within a certain service area,
CHARACTERISED IN THAT said service node (SGSN3) comprises:
a. private multi-cast address recognition means (PR-RECOGNITION) to recognise a private multi-cast address (PR-MCA) in an overhead section (PR-H) of private data packets (PR-DP) that tunnel through at least part of said mobile data packet network (GPRS-SYSTEM) public data packets (PU-DP) sent from an originating terminal (TE) over a public data packet network (INTERNET) and said mobile data packet network (GPRS-SYSTEM) to at least a plurality of mobile stations (MS2, MS3) within said service area; and
b. means (COPY/SEND) to generate copies of said public data packets (PU-DP) and to send a copy to each one of said mobile stations (MS2, MS3).

7. Service node (SGSN3) according to claim 6,
CHARACTERISED IN THAT said service node (SGSN3) further comprises:
c. private join/leave message receiving means (PR-JN/LV RX) adapted to receive a private join/leave message indicating that a mobile station (MS2) wants to join/leave a public multi-cast group; and
d. registration means (MS-REGISTRATION), coupled to said private join/leave message receiving means (PR-JN/LV RX), and adapted to register inclusion and deletion of a mobile station (MS2).

8. Service node (SGSN3) according to claim 6,
CHARACTERISED IN THAT said service node (SGSN3) further comprises:
e. GPRS join/leave message receiving means to receive a GPRS message indicating that a mobile station (MS2) wants to join/leave a public multi-cast group; and
f. registration means (MS-REGISTRATION) coupled to said GPRS join/leave message receiving means and adapted to register inclusion and deletion of said mobile station (MS2) to or from said public multi-cast group.

9. Routing node (DPR1, DPR2, DPR3, DPR4, DPR5, DPR6) for routing private data packets (PR-DP) from a gateway node (GGSN1) to at least one service node (SGSN 1, SGSN3) of a mobile data packet network (GPRS-SYSTEM), said private data packets (PR-DP) being adapted to tunnel public data packets (PU-DP) sent from an originating terminal (TE) over a public data packet network (INTERNET) and said mobile data packet network (GPRS-SYSTEM) to at least a plurality of mobile stations (MS1, MS2, MS3, MS4, MS6),
CHARACTERISED IN THAT said routing node (DPR1, DPR2, DPR3, DPR4, DPR5, DPR6) comprises means to multi-cast said private data packets (PR-DP) by means of a private multi-cast address (PR-MCA) in an overhead section (PR-H) of said private data packets (PR-DP).
